# EUROPEAN PATENT APPLICATION

(11) **EP 4 629 353 A1**
(43) Date of publication of application: **08.10.2025**
(21) Application number: 24168788.8
(22) Date of filing: 05.04.2024
(51) Int. Cl.: H01M 8/04029, H01M 8/04007, H01M 8/04225, H01M 8/04223, H01M 8/04746

(54) **FUEL CELL SYSTEM WITH DEFREEZING CAPABILITY**

(71) Applicant: Airbus Operations GmbH, 21129 Hamburg (DE)
(72) Inventor: Liphardt, Leonard, 21129 Hamburg (DE); Kurre, Jens-Dietrich, 21129 Hamburg (DE)
(74) Representative: Schornack, Oliver

(57) **Abstract**

The present disclosure relates to a fuel cell system (100) capable of defreezing a dedicated component (120) by guiding a coolant via a coolant branch line (125, 126) from a fuel cell stack 110 to the dedicated component (120). Further disclosed is a vehicle comprising such fuel cell system.

## Description

The present disclosure generally relates to a fuel cell system and an aircraft having the same, that allows defreezing of the fuel cell system. Particularly, the present disclosure relates to a fuel cell system having a coolant branch line guiding coolant to a dedicated component of the fuel cell system, and an aircraft having such fuel cell system.

In fuel cell systems chemical energy is transformed into electricity and heat. Particularly, if hydrogen is used as fuel for the fuel cell, the resulting reaction product is water. Such reaction product, also referred to as process water or water in the fuel cell, is discharged from an outlet of the fuel cell stack.

If such fuel cell system is used in an environment, where sub-zero temperatures can be present, there is a risk that the process water in the fuel cell stack or any component downstream of its outlet freezes. This, however, can block the respective part of the fuel cell system. Thus, if the fuel cell stack starts operating, while ice is built up in some of the fuel cell system's components, the operation of the fuel cell system may fail.

Therefore, fuel cell systems were provided with electric heaters to heat the fuel cell system or portions thereof before the fuel cell stack can start operating.

It is therefore an object of the present disclosure to provide a fuel cell system that allows fast start-up and has a simple setting.

This object is solved by the present invention as defined in the independent claims. Preferred embodiments are defined by the dependent claims.

According to a first aspect to better understand the present disclosure, a fuel cell system comprises a fuel cell stack, a cooling circuit configured to cool the fuel cell stack, and a coolant branch line connected to the cooling circuit and guiding coolant of the cooling circuit to a dedicated component of the fuel cell system.

When the fuel cell stack starts operating, fuel (e.g., hydrogen) is converted into electricity, water and heat. Since the cooling circuit of the fuel cell system is specifically provided to transport heat away from the fuel cell stack (to maintain the operating temperature of the stack (e.g., 80 to 90 °C)), the heat generated by the starting fuel cell stack will heat the coolant of the cooling circuit. Thus, heat is easily transported to the dedicated component of the fuel cell system. A temperature of the dedicated component, hence, will increase, particularly above 0°C, so that the dedicated component is automatically defreezed during start-up of the fuel cell stack.

This transport of heat from the fuel cell stack to the dedicated component may even occur without conveying the coolant. As a mere example, the warming coolant may automatically move in the cooling circuit due to its thermal expansion or by thermal convection. In addition, the coolant may change its state of aggregation, such as changing from a liquid to a gaseous state when exceeding a certain temperature, which facilitates transport of the one coolant towards the dedicated component.

Furthermore, the dedicated component can be defreezed without an electric heater or further components that requires its own energy source and maintenance.

In an implementation variant, the dedicated component can be a component of the fuel cell system that is in contact with process water generated in the fuel cell stack. For instance, the dedicated component can be a portion of the fuel cell stack at its cathode side, where water develops, or any component arranged downstream of the cathode side, particularly, to discharge the water from the fuel cell stack.

In an implementation variant, the dedicated component can be a water separator, an exhaust water pipe, a valve, and/or a water tank or the like. The water separator separates water (droplets) from gas (e.g., air and/or steam). The exhaust water pipe can be a pipe discharging the water from the cathode side of the fuel cell stack. The valve can be a valve in the exhaust water pipe and/or at an outlet of the cathode side of the fuel cell stack. The water tank can be a buffer tank in, at or close to the fuel cell stack and/or can be connected to the exhaust water pipe.

In an implementation variant, the coolant branch line can comprise a supply branch line beginning at a branch off point of a coolant discharge line of the cooling circuit disposed at a coolant outlet of the fuel cell stack, and a return branch line, an end of which is connected to the cooling circuit downstream of the branch off point of the coolant discharge line. Furthermore, the dedicated component can be arranged at an end of the supply branch line and a beginning of the return branch line.

Thus, the coolant branch line bypasses at least a small portion of the coolant circuit, in order to guide coolant to the dedicated component. Since the coolant branch line branches of the coolant discharge line, it is arranged closest to the warmest spot of the system, i.e., the fuel cell stack. Therefore, coolant is guided to the dedicated component from a portion of the cooling circuit spatially close to the heat source warming the coolant in the cooling circuit.

In an implementation variant, the dedicated component can comprise heat exchange means, through which coolant of the coolant branch line streams and which is configured to exchange heat between the coolant and the dedicated component.

In an implementation variant, the heat exchange means can be a coolant pipe contacting and/or surrounding the dedicated component or at least a portion thereof. The heat exchange means can be a double-walled pipe or component, wherein the coolant is guided into the spacing of the double-walled pipe or component. For instance, the dedicated component can be surrounded at least partially by an additional housing, and the coolant from the coolant branch line streams through a space inside of the housing, for example, flowing around the dedicated component or a portion thereof.

In an implementation variant, the end of the return branch line can be connected to the coolant discharge line, a coolant supply line supplying coolant to the fuel cell stack, or a bypass line connecting the coolant discharge line and the coolant supply line. Thus, the coolant branch line is a stub line or bypass line of a portion of the coolant circuit. Depending on the portion of the cooling circuit, where the coolant of the coolant branch line re-enters the cooling circuit, the coolant can quickly be returned to the fuel cell stack, so that this "short circuit" heats up fast during start-up of the fuel cell stack, and the dedicated component is defreezed in a fast manner.

In an implementation variant, the cooling circuit can further comprise a conveying device configured to convey coolant through the cooling circuit, and a heat exchanger configured to thermally couple coolant received from the coolant discharge line with a heat sink. Thus, the cooling circuit can be a regular cooling circuit for the fuel cell stack, where heat generated by the fuel cell stack is transported to the heat sink. Particularly, during start-up of the fuel cell stack, the dedicated component as well as other portions of the fuel cell stack are heated faster due to the coolant branch line than compared to conventional fuel cell systems.

In an implementation variant, the bypass line can connect the coolant discharge line with a coolant line of the cooling circuit connecting the heat exchanger with the conveying device. Therefore, the cooling circuit can be operated without cooling the coolant at the heat exchanger. This particularly facilitates warming the dedicated component and further facilitates a fast start-up of the fuel cell stack.

In an implementation variant, the fuel cell system can further comprise a valve in the supply branch line and/or the return branch line, in order to couple and decouple the coolant branch line from the remaining cooling circuit.

In an implementation variant, the fuel cell system can further comprise a control unit configured to control the conveying device to stop or operate at a reduced conveying rate during a start-up phase of the fuel cell stack. Thus, instead of regular operation of the fuel cell stack and cooling circuit, during the start-up phase, the cooling circuit is not operated at all or in a manner of reduced heat transport. This facilitates heating up the coolant in the cooling circuit portion including the coolant branch line, so that the dedicated component is warmed and the fuel cell stack can fast reach an operating temperature.

In an implementation variant, the control unit can be further configured to close at least one valve of the cooling circuit to block coolant from streaming through the heat exchanger. Thus, even if the conveying device operates, the coolant may flow only through portions of the cooling circuit including the coolant branch line, but is not passing through the heat exchanger, where the coolant would lose heat to the heat sink (i.e., would cool down).

According to a second aspect to better understand the present disclosure, a vehicle comprises at least one fuel cell system of the first aspect or one or more of its variants.

As a mere example, the vehicle can be an aircraft or spacecraft, which may be exposed to cold temperatures. Thus, a fuel cell system in such a vehicle is regularly at risk that it freezes or at least portions thereof when being exposed to the cold temperatures.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a fuel cell system;
- Figure 2: schematically illustrates details of a dedicated component of the fuel cell system; and
- Figure 3: schematically illustrates a vehicle comprising a fuel cell system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

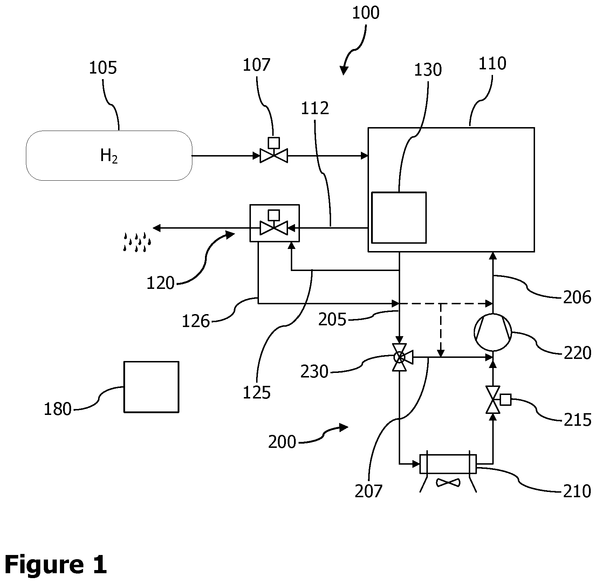

Figure 1 schematically illustrates a fuel cell system 100 comprising a fuel cell stack 110, and a cooling circuit 200 configured to cool the fuel cell stack 110. Specifically, the cooling circuit comprises a coolant discharge line 205 disposed (beginning) at a coolant outlet of the fuel cell stack 110, a coolant supply line 206 supplying coolant to the fuel cell stack 110, and a conveying device 220 configured to convey coolant through the cooling circuit 200. A heat exchanger 210 of the cooling circuit 200 thermally couples the coolant of the cooling circuit 200 with a heat sink (in Figure 1 exemplarily illustrates air conveyed through the heat exchanger by a fan as the heat sink). Thus, when the conveying device 220 operates, coolant circulates through coolant supply line 206, the fuel cell stack 110, the coolant discharge line 205, the heat exchanger 210 and back to the conveying device 220. This allows cooling the fuel cell stack 110, i.e. transporting heat generated during regular operation of the fuel cell stack 110 to the heat sink at heat exchanger 210.

The cooling circuit 200 can further comprise a bypass line 207, which allows bypassing the heat exchanger 210. The bypass line 207 begins at the coolant discharge line 205 and ends upstream of the conveying device 220. For instance, a three way valve 230 can be employed to guide at least a portion of the coolant from the coolant discharge line 205 into the bypass line 207 and/or to the heat exchanger 210. Thus, the temperature of the coolant before entering the conveying device 220 can be controlled by the three-way valve 230.

Furthermore, a controlled valve 215 can be provided in the cooling circuit 200 downstream of the heat exchanger 210 and upstream of the conveying device 220. The controlled valve 215 further allows to control the amount of coolant flowing from the heat exchanger 210 to the conveying device 220. It is to be understood that the controlled valve 215 may also be used to control the amount of coolant bypassing the heat exchanger 210 via bypass line 207.

The fuel cell system 100 further comprises a coolant branch line 125, 126 connected to the cooling circuit 200 and guiding coolant of the cooling circuit 200 to a dedicated component 120 of the fuel cell system 100. Figure 1 only exemplarily illustrates a valve 120 as such dedicated component. It is to be understood that any other dedicated component of the fuel cell system 100 may be provided with coolant via the coolant branch line 125, 126. This includes also a component 130 in or close to the fuel cell stack 110 as illustrated in Figure 1. Explaining the dedicated component and coolant branch line 125, 126 with respect to the "external" valve 120 increase clarity of Figure 1.

The dedicated component can be a component of the fuel cell system 100 that is in contact with process water generated in the fuel cell stack 110. Examples of such dedicated components are a water separator 130, an exhaust water pipe 112, a valve 120 and/or a water tank (not specifically illustrated, as the exhaust water is only shown as drops at the end of exhaust water pipe 112, where an exemplary water tank could be installed).

The coolant branch line can comprise a supply branch line 125 beginning at a branch off point of the coolant discharge line 205. The supply branch line 125 allows guiding coolant from the coolant discharge line 205 to the dedicated component 120. Likewise, a return branch line 126 can begin at the dedicated component 120 and an end thereof is connected to the cooling circuit 200 downstream of the branch off point of the coolant discharge line 205. The dedicated component 120, hence, is arranged at an end of the supply branch line 125 and a beginning of the return branch 126. Thus, the coolant in the coolant branch line 125, 126 forming a stub line or a short circuit loop of the entire cooling circuit 200 is taken away from the cooling circuit 200 closely downstream or at the coolant outlet of the fuel cell stack 110, where the coolant has the highest temperature.

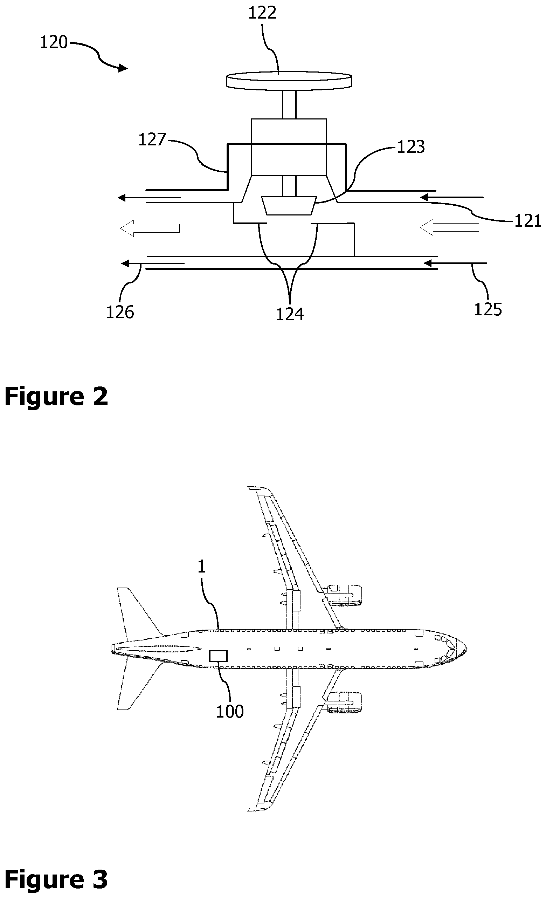

Figure 2 schematically illustrates details of a dedicated component 120, such as valve 120 of the fuel cell system 100 of Figure 1. The dedicated component 120 comprises heat exchange means 127 through which coolant of the coolant branch line 125, 126 streams and which is configured to exchange heat between the coolant and the dedicated component 120.

In more detail, the exemplary valve 120 is provided with a surrounding housing 127. The housing 127 can form a double-walled pipe together with the valve line 121. The intermediate space created between the valve 120 (particularly the valve line 121) and the surrounding housing 127 provides a space for coolant. Thus, the supply branch line 125 can be fluidly coupled thereto, so that its coolant streams through the intermediate space (to the right in Figure 2). After exchanging heat with the dedicated component 120 (here the valve 120), the (cooled) coolant can stream from the intermediate space into the return branch line 126 and back to the cooling circuit 200.

It is to be understood that other heat exchange means can be provided. As a mere example, the supply branch line 125 can be wound around the dedicated component 120, 130. Alternatively or additionally, the supply branch line 125 and/or return branch line 126 can widen and the flat, to cover a larger area of the dedicated component 120, 130.

The valve 120 comprises a closure member and actuator, such as in the exemplarily illustrated globe valve 120 with disc 123 and stem wheel 122. The disc 123 can be moved up and down in Figure 2, in order to close the valve passage at the valve seat 124, by turning the wheel 122. Since water can be present in the exhaust water pipe 112 and, hence, in the valve 120 and particularly at the disc 123 and valve seat 124, the valve 120 is at risk of freezing and blocking, if the fuel cell system is exposed to freezing temperatures during a phase where the fuel cell stack 110 is not operating.

Thus, when starting to operate the fuel cell stack 110, the heat generated in the fuel cell stack due to the reaction of the fuel and oxidiser will heat up the coolant in the cooling circuit 200. Since the supply branch line 125 branches off the coolant discharge line 205 at or close to the coolant outlet of the fuel cell stack 110, the dedicated component 120 can be heated by the coolant in the supply branch line 125. Thus, a defreezing of the dedicated component 120 can be achieved in a fast manner during start-up of the fuel cell stack 110.

Referring back to Figure 1, the fuel cell system 100 can comprise a control unit 180 configured to control at least parts of the cooling circuit 200, such as the conveying device 220. For instance, during the start-up phase of the fuel cell stack 110, the control unit 180 may stop the conveying device 220 or operate it at a reduced conveying rate. Thus, coolant may be transported through the cooling circuit 200, including the coolant branch line 125, 126. Thus, already during start-up of the fuel cell stack 110, the dedicated component 120, 130 can be heated and defreezed.

Furthermore, the control unit 180 can further close controlled valve 215 of the cooling circuit. Thus, coolant is blocked from streaming through the heat exchanger 210, so that the coolant in the cooling circuit 200 does not lose heat to the heatsink.

Moreover, the control unit 180 can further control three way valve 230, particularly during start-up of the fuel cell stack 110. The control unit 180 can either close the three-way valve entirely or can guide coolant through the bypass line 207.

The control unit 180 may control the valve 215, 230 and the conveying device 220 also based on the installation of the return branch line 126. Specifically, an end of the return branch line 126 can be connected to the coolant discharge line 205 (as illustrated by the solid line 126 in Figure 1). Thus, in case a circulation of the coolant is desired, the control unit 180 may control the three way valve 230, so that the coolant streams through the bypass line 207. Alternatively, the end of the return branch line 126 can be connected to the coolant supply line 206 or the bypass line 207 (as illustrated by a respective dashed line in Figure 1). In this case, the control unit 180 may close the three way valve 230 completely.

In any case, during the start-up phase of the fuel cell stack 110 the coolant may convey, for example, by convection (and gravity) and/or by a reduced speed of the conveying device 220. A reduced speed means a smaller conveying rate than during operation of the conveying device 220 when the fuel cell stack 110 operates at regular operating temperature and full cooling capacity of the cooling circuit 200 is required.

Figure 3 schematically illustrates a vehicle 1 comprising a fuel cell system 100. Only as an example, the vehicle can be an aircraft 1 that employs the fuel cell system 100 of Figures 1 and 2, in order to generate electricity required on board the aircraft 1.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A fuel cell system (100), comprising:
a fuel cell stack (110); and
a cooling circuit (200) configured to cool the fuel cell stack (110),
**characterised in that** the fuel cell system (100) further comprises:
a coolant branch line (125, 126) connected to the cooling circuit (200) and guiding coolant of the cooling circuit (200) to a dedicated component (120, 130) of the fuel cell system.

2. The fuel cell system (100) of claim 1, wherein the dedicated component is a component of the fuel cell system (100) that is in contact with process water generated in the fuel cell stack (110).

3. The fuel cell system (100) of claim 2, wherein the dedicated component is a water separator (130), an exhaust water pipe (112), a valve (120), and/or a water tank.

4. The fuel cell system (100) of one of claims 1 to 3, wherein the coolant branch line comprises a supply branch line (125) beginning at a branch off point of a coolant discharge line (205) of the cooling circuit (200) disposed at a coolant outlet of the fuel cell stack (110), and a return branch line (126), an end of which is connected to the cooling circuit (200) downstream of the branch off point of the coolant discharge line (205), and
wherein the dedicated component (120, 130) is arranged at an end of the supply branch line (125) and a beginning of the return branch line (126).

5. The fuel cell system (100) of one of claims 1 to 4, wherein the dedicated component (120, 130) comprises heat exchange means (127), through which coolant of the coolant branch line (125, 126) streams and which is configured to exchange heat between the coolant and the dedicated component (120, 130).

6. The fuel cell system (100) of one of claims 1 to 5, wherein the end of the return branch line (126) is connected to the coolant discharge line (205), a coolant supply line (206) supplying coolant to the fuel cell stack (110), or a bypass line (207) connecting the coolant discharge line (205) and the coolant supply line (206).

7. The fuel cell system (100) of claim 6, wherein the cooling circuit (200) further comprises a conveying device (220) configured to convey coolant through the cooling circuit, and a heat exchanger (210) configured to thermally couple coolant received from the coolant discharge line (205) with a heat sink.

8. The fuel cell system (100) of claim 7, wherein the bypass line (207) connects the coolant discharge line (205) with a coolant line of the cooling circuit connecting the heat exchanger (210) with the conveying device (220).

9. The fuel cell system (100) of claim 7 or 8, further comprising:
a control unit (180) configured to control the conveying device (220) to stop or operate at a reduced conveying rate during a start-up phase of the fuel cell stack (110).

10. The fuel cell system (100) of claim 9, wherein the control unit (180) is further configured to close at least one valve (215, 230) of the cooling circuit to block coolant from streaming through the heat exchanger (210).

11. An vehicle (1), comprising:
at least one fuel cell system (100) of one of claims 1 to 10.
